(19) Europäisches Patentamt
European Patent Office
Office européen des brevets

(11) **EP 2 642 436 A1**

(12) **EUROPEAN PATENT APPLICATION**

(43) Date of publication:
**25.09.2013 Bulletin 2013/39**

(51) Int Cl.:
**G06Q 10/08** (2012.01)      **G06K 19/07** (2006.01)

(21) Application number: **12160205.6**

(22) Date of filing: **19.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rmoni Wireless NV**
**3740 Bilzen (BE)**

(72) Inventor: **Kestens, Mark Pierre**
**3390 TIELT-WINGE (BE)**

(74) Representative: **Plas, Axel Ivo Michel**
**IP HILLS NV**
**Hubert Frère-Orbanlaan 329**
**9000 Gent (BE)**

(54) **A wireless device and a wireless platform for real-time monitoring of perishable products during transport**

(57)      The invention relates to a wireless device (1) and a platform (100) for real-time monitoring of perishable products during transport, comprising
- a measured parameter logger (11) configured to log parameter values of one or more sensor(s) (10);
- a microbial spoilage model and microbial spoilage model parameter storage;
- an interface adapted to receive information indicative for the type of perishable product to be monitored during transport;
- a remaining shelf life calculator (12) configured to calculate one or more remaining shelf life values of said monitored perishable products in the wireless device (1) itself, said remaining shelf life value(s) being calculated depending on the type of monitored perishable product using the appropriate spoilage model;
- a remaining shelf life value storage (11); and
- a wireless interface (13) configured to transmit said remaining shelf life value(s) to a gateway (103, 104) which is adapted to transmit these remaining shelf life value(s) to a remote backend system (102).

FIG 2

EP 2 642 436 A1

Printed by Jouve, 75001 PARIS (FR)

## Description

### Field of the Invention

The present invention generally relates to real-time monitoring of perishable products. Perishable products in the light of the invention are products which are subject to decay or spoilage. Such products include amongst others foodstuff for human or animal consumption, pharmaceuticals, chemicals, cut flowers, etc., but are not limited thereto.
More specifically, the present invention relates to real-time monitoring of perishable products during transport using one or more wireless devices and a wireless platform.

### Background of the Invention

Environmental conditions such as temperature and pressure endured by perishable products during storage and transport have a significant impact on the ultimate shelf life of the products. The shelf life of a perishable product is the length of time that food, drinks, medication, chemicals and many other perishable items are given before they are considered unsuitable for sale, use, or consumption. Since storage and transportation of perishable products in inappropriate conditions can lead to quality losses of the stored and transported products, quality control and monitoring of products during transportation and delivery services is an increasing concern for manufacturers, suppliers, transport decision makers and consumers. All parties of the supply and distribution chain are faced with the difficulty to assure products are safely and properly stored and finally delivered to the consumer with an accurate indication of the remaining shelf life before consumption. Often, the manufacturer has to rely on the integrity and honesty of the distributors to assure that the products are stored and delivered in the appropriate conditions.
Certainly for fresh perishable food products such as vegetables, fruit, meat or fish, but also for some other perishable products such as certain types of pharmaceuticals or chemicals, and also for cut flowers, temperature is an important parameter for maximizing shelf life. Such products mostly require cooled or refrigerated transport. During such transport, it has to be ensured that the temperature inside the transport units is correct, certainly when taking into account that local temperature deviations are present in almost any transport situation and deviations of only a few degrees can already lead to spoiled goods and an important financial loss. Maintaining the appropriate temperature during transport is also of primordial importance when shipping perishable products which can lead to infections, illness and in the worst case death of the consumer after being consumed when already expired.
At present, different solutions are known for monitoring perishable products during transport in containers and trucks.
A first solution is the use of a data logging device that monitors and records the required data in order to determine the remaining shelf life of a monitored product. Already different such data logging devices are known.
In US 6,798,376, for instance, a system and method are disclosed for dynamically adjusting expiration dates displayed on consumer products. The system and method therewith utilize an LCD display which is mounted on the package of the respective product and displays a date set corresponding with a future expiration date for the product. The expiration date is controlled and modified by a signal from a controller. The controller receives sensor signals from one or more sensors. These sensors are provided to detect environmental factors such as temperature, humidity, container seal integrity and other relevant factors relevant to the expiration date of the product. Based on the sensor signals received from the sensors, the controller adjusts the expiration date shown on the LCD display. The controller is preset when the product is packaged to cause the display of a predetermined expiration date. The controller is also preprogrammed to recognize environmental trigger conditions while monitoring sensors. Upon detecting an environmental trigger condition, the controller adjusts the expiration date. Such an environmental trigger point may cause a one-time adjustment of the expiration date. Adjustments of the expiration date may however also be continually made for as long as the product is being subject to the triggering environmental conditions. For this kind of expiration date adjustment, the controller is provided with a clock which counts downwards from the previous expiration date at a predetermined rate. When a preset trigger condition is reached (e.g. the container is opened or the temperature rises above freezing), the clock is started, causing the expiration date to decrease at a rate that is determined in accordance with tables and / or logic preprogrammed into the controller. Thus, based on the modulated clock output during the adverse environmental condition, an appropriate adjustment of the expiration date to be displayed is made.
The disadvantage of this data logging device is that the determination of the displayed expiration date exists either of a one-time adjustment, or of a continuous adjustment by means of a clock running in reverse towards a time closer to the present as soon as a predefined condition takes place. This way of determining the expiration date depending on the occurrence of a specific condition, like a temperature threshold that is exceeded, is not sufficiently accurate leading to imprecise expiration dates.
A similar data logging device being provided to be mounted on a container and displaying the remaining useful lifetime of a product is described in GB 2 361 064. This data logging device includes one or more sensors for sensing one or more different physical and / or chemical factors that might affect the lifetime of the product, amongst other temperature and humidity. These one or more sensors are connected to a microprocessor that monitors and saves the output signal from the sensor. The output signal is compared with the values present in look-up degradation tables, and the remaining useable lifetime of the product is calculated. The microprocessor furthermore includes a clock to measure the elapsed time from when the device was started. An interface may be connected to the microprocessor in order to be able to download or upload data from for example a computer or a modem. A visual or audible alarm or warning device may be included to alert the operator that the useful lifetime of a product has expired or is about to expire.

GB 2 361 064 does not clearly disclose how the remaining lifetime of the product is calculated after comparing it with the values in the look-up tables. In each case, determining the remaining lifetime using look-up degradation tables leads to an inaccurate and imprecise remaining lifetime of the respective product.

Another solution for monitoring products during storage and / or transport is the use of wireless sensor loggers that are coupled to the truck or to the warehouse and that are able to monitor the temperature and / or other environmental parameters of the perishable products.

The disadvantage of these wireless sensor loggers is that these are only able to provide sensor data such as temperature and humidity. They however do not provide sufficient information about business critical parameters of the distribution chain. For perishable products, the business critical parameters are the freshness and quality loss of these products during storage and transport, being expressed as the remaining shelf life of the product. These wireless sensor loggers rely on download and subsequent analysis of the data captured during transport, upon arrival at destination, and are not able to determine the remaining shelf life of the transported products in real-time and deliver the remaining shelf life together with the goods. These type of wireless sensor loggers also do not allow monitoring on pallet level throughout the whole supply chain.

Other known solutions consist of a shelf life monitoring sensor-transponder system using RFID (radio frequency identification) tags.

In WO 2005/106813 for instance, a perishable integrity indicator system is disclosed which includes an RFID transponder and a perishable integrity sensor. The RFID transponder includes an RF integrated circuit coupled with an antenna. The sensor monitors the time and temperature of the perishable. A freshness determining module receives time- and temperature data from the perishable integrity sensor and determines a current freshness status. A communications interface to the RFID transponder permits an RFID reader to retrieve current freshness status data as determined by the freshness determining module.

The disadvantage of using an RFID as transponder is that calculation of the shelf life is not executed locally in the transponder. Wide area connectivity is required to transfer the sensed data to a processor that can calculate the shelf life. Such wide area connectivity is not available everywhere and remains costly when available. The perishable goods will first have to be unloaded before a reading will be possible. Furthermore, the determination of the remaining shelf life is not sufficiently accurate.

WO 2008/087396 discloses a system for monitoring stress suffered by perishable goods during transport, and the use of the information collected to predict the shelf life of the goods. The system thereto comprises at least one sensor for measuring the environmental conditions that may have an impact on, or would otherwise be useful in determining, the shelf life of the perishable goods being distributed and which is located in close proximity to the goods, for example being attached to or placed within each individual item, box, crate, pallet or shipment. Each sensor or group of sensors is linked to an RFID tag. This RFID tag is designed to transmit the data collected by the sensor(s) to an RF reader by either passive or active means. The RF reader may for example send a suitable signal to trigger the RFID tag (s) to transmit data. Alternatively, the RFID tags actively transmit data continuously, or at regular intervals. The shelf life is calculated by inputting the environmental data to an algorithm which is suitably based on the relationship between environmental conditions such as temperature and time. Furthermore, a means for transmitting the data from the RF reader to a downstream point in the supply chain are provided. Such means on the one hand can include a direct hard-wired connection, a local area wireless network to a direct hard-wired hub or a wide area wireless network (for instance a cellular phone system).

Since RFID is used, reach of the system is limited and suffers from the disadvantages similar to those described here above in relation to RFID based solutions. The transmission of data from the RF reader to a downstream point in the supply chain is only possible in two ways, i.e.

   1/ by means of a direct hard-wired connection to a hard-wired hub at or near the place of the delivery of the goods; or
   2/ by means of a wide area wireless network during transport.

The disadvantage of the first possibility is that no real-time monitoring of the shelf life during transport is possible. The second option has as disadvantage that a permanent connection with the downstream point is necessary in order to obtain a real-time monitoring of the shelf life during transport. In other words, it is dependent on the availability of wide area wireless network connectivity [e.g. GSM (Global System for Mobile Communications), GPRS (General Packet Radio Service), UMTS (Universal Mobile Telecommunications System), Satellite, etc.] and remains costly when such connectivity is available (subscription costs, communication costs, roaming costs for international transports, etc.)

Furthermore, although it is stated in WO 2008/087396 that the suitable algorithms for calculating the shelf life are known to the person skilled in the art, it is not clear how exactly the remaining shelf life is calculated since different methods are known in the state of the art.

It is an objective of the invention to provide an intelligent wireless device and a wireless platform comprising one or more such devices, this wireless device being able to monitor perishable products in real-time, i.e. while the products are transported, and which is able to determine business critical parameters accurately, thereby enabling precise determination of the freshness of perishable products in order to reduce waste thereof.

It is a further object of the invention to allow monitoring on pallet level of perishable products during transport. This is particularly useful when different types of perishable products are transported within the same transport unit.

It is also an objective of the invention to monitor the perishable products in real-time, during transport, without the mandatory need for permanent and costly wide area connectivity.

## Summary of the Invention

The objectives of the invention are solved by providing a wireless device for real-time monitoring of perishable products during transport, comprising

- a measured parameter logger configured to log one or more parameter values of the monitored perishable products measured during transport by means of one or more sensor(s);
- a microbial spoilage model storage configured to store a plurality of microbial spoilage models;
- a microbial spoilage model parameter storage configured to store at least one microbial spoilage model parameter associated with said microbial spoilage models;
- a communication interface adapted to receive information indicative for the type of perishable product to be monitored during transport;
- a remaining shelf life calculator located within the wireless device itself and configured to calculate one or more remaining shelf life values of said monitored perishable products, said remaining shelf life value(s) being calculated by means of the following steps:

  • selecting the appropriate microbial spoilage model from said plurality of microbial spoilage models stored in said microbial spoilage model storage in function of said information indicative of the type of perishable product to be monitored during transport as received by said communication interface,
  • configuring the selected microbial spoilage model by means of the associated microbial spoilage model parameters as stored in said microbial spoilage model parameter storage; and
  • calculating said remaining shelf life value(s) by inputting said parameter value(s) as logged by said measured parameter logger to said selected microbial spoilage model configured by said associated microbial spoilage model parameters; and

- a remaining shelf life value storage configured to store said remaining shelf life value(s) calculated by said remaining shelf life calculator; and
- a wireless communication interface configured to transmit said remaining shelf life value(s) stored in said remaining shelf life value storage to a gateway which is adapted to transmit these remaining shelf life value(s) to a remote backend system.

A major advantage of the wireless device according to the invention is that the remaining shelf life is determined depending on the type of perishable product monitored while it is being transported. The appropriate microbial spoilage model is used to calculate the remaining shelf life of the monitored perishable product. As a result, an accurate and precise value of the remaining shelf life of the monitored perishable product is obtained, leading to a much better quality control of this perishable product and leading to less waste of products which are still consumable. This furthermore allows a pro-active influence of the supply chains and enables a qualitative evaluation of the transporter.

Furthermore, since the processing of the sensed parameters occurs locally on the wireless device itself, the invention can be used without depending on the availability of wide area network connectivity and does not necessitate expensive components such as a GPRS transceiver. This makes the monitoring of perishable products during transport less complex and more cost- effective.

The wireless device according to the invention also allows monitoring on pallet level of the perishable products during the complete distribution chain, since one or more wireless devices according to the invention can be affixed to a pallet.

On the one hand, said gateway can be adapted to transmit said remaining shelf life value(s) calculated by said remaining shelf life calculator to the remote backend system only on delivery of the perishable products after transport.

Although it is an objective of the present invention to monitor the perishable products in real-time, during transport, without the need for permanent wide area connectivity, on the other hand, quasi real-time monitoring of the perishable products during transport still remains possible by configuring said gateway such that it is adapted to transmit said remaining shelf life value(s) calculated by said remaining shelf life calculator to the backend system at regular intervals during transport through a board computer or a wide area wireless network communication means.

In a favourable embodiment of a wireless device according to the invention, said microbial spoilage models are implemented in a software program which is adapted to be run on the wireless device.

A first possible embodiment of the interface for receiving information indicative for the type of perishable product monitored during transport consists of said wireless communication interface with the remote backend system. The selection of the type of perishable product to be monitored then is done by using the remote backend system.

A second possible embodiment of the interface for receiving information indicative for the type of perishable product monitored during transport consists of a manual interface provided on the wireless device itself.

In a preferred embodiment of a wireless device according the invention, the wireless device is provided with visual and / or auditive warning means configured to provide an alarm when said parameter value(s) measured by said sensor(s) and / or said remaining shelf life value(s) exceed a predefined threshold value.

Said visual warning means preferably consist of one or more LEDs adapted to light up when said parameter value(s) and / or said remaining shelf life value(s) exceed a predefined threshold value.

Said auditive warning means preferably consist of a buzzer adapted to produce a sound when said parameter value(s) and / or said remaining shelf life value(s) exceed a predefined threshold value.

In an advantageous embodiment of a wireless device according to the invention, the wireless device is provided with a display displaying said remaining shelf life value(s) of the monitored perishable products. By providing such a display, the user of the wireless device can immediately see the remaining shelf life value of the transported monitored perishable products.

In a possible embodiment of a wireless device according to the invention, said remaining shelf life calculator is adapted to calculate said remaining shelf life value(s) at regular intervals during transport, enabling a user of the wireless device to track when certain events having an impact on the remaining shelf life of the monitored perishable products took place.

In another possible embodiment of a wireless device according to the invention, said measured parameter logger is adapted to log a sequence of a plurality of parameter values measured by said sensor(s), and said remaining shelf life calculator is adapted to calculate the remaining shelf life value of the monitored perishable product using said sequence of said plurality of parameter values.

Said one or more sensor(s) are preferably adapted to measure the temperature of the monitored perishable products.

The objective of the invention is furthermore solved by providing a wireless platform for real-time monitoring of perishable products during transport, comprising

- a transport unit equipped with one or more wireless devices, comprising

    • a measured parameter logger configured to log one or more parameter values of the monitored perishable products measured during transport by means of one or more sensor(s);
    • a microbial spoilage model storage configured to store a plurality of microbial spoilage models,
    • a microbial spoilage model parameter storage configured to store at least one microbial spoilage model parameter associated with said microbial spoilage models;
    • a communication interface adapted to receive information indicative for the type of perishable product to be monitored during transport;
    • a remaining shelf life calculator located within the wireless device itself and configured to calculate one or more remaining shelf life values of said monitored perishable products, said remaining shelf life value(s) being calculated by means of the following steps:

        ■ selecting the appropriate microbial spoilage model from said plurality of microbial spoilage models stored in said microbial spoilage model storage in function of said information indicative of the type of perishable product to be monitored during transport as received by said communication interface;
        ■ configuring the selected microbial spoilage model by means of the associated microbial spoilage model parameters as stored in said microbial spoilage model parameter storage; and
        ■ calculating said remaining shelf life value(s) by inputting said parameter value(s) as logged by said measured parameter logger to said selected microbial spoilage model parameters; and

- • a remaining shelf life value storage configured to store said remaining shelf life value(s) calculated by said remaining shelf life calculator;
- • a wireless communication interface configured to transmit said remaining shelf life value(s) stored in said remaining shelf life value storage to a gateway which is adapted to transmit these remaining shelf life value(s) to a remote backend system; and

- - a remote backend system adapted to receive said remaining shelf life value(s) transmitted by said wireless communication interface.

In a preferred embodiment of a wireless platform according to the invention, said transport unit comprises one or more wireless devices according to the invention as described above.

The wireless platform according to the invention is very suitable to be applied to cooling transport, since in such transport, as already stated above, monitoring of the temperature of the transported products plays a crucial role to maximize the shelf life of these products.

**Brief Description of the Drawings**

Fig. 1 illustrates a scheme of a wireless device according to the invention.

Fig. 2 illustrates a scheme of a wireless platform including a truck provided with a number of wireless devices according to the invention.

**Detailed Description of Embodiment(s)**

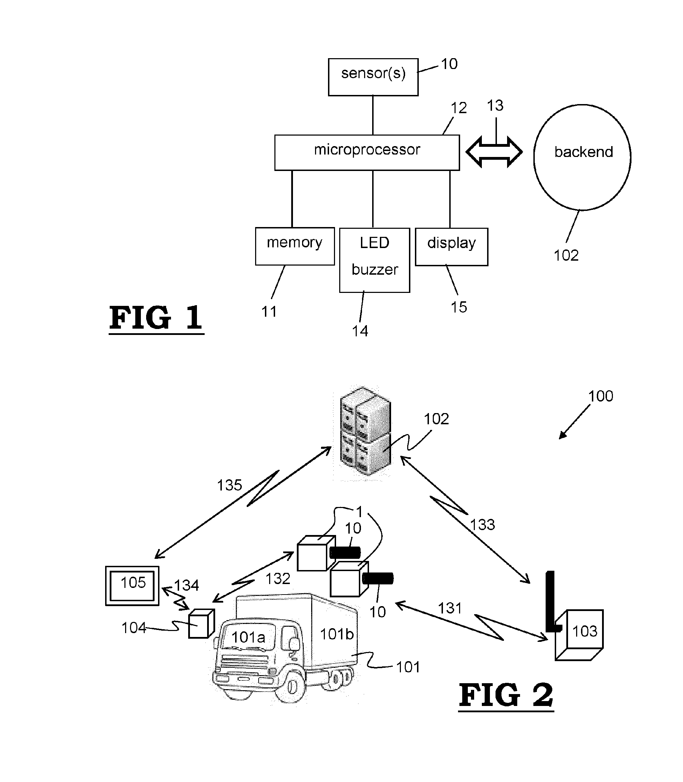

In figure 2, an embodiment of a wireless device (1) for real-time monitoring of perishable products during transport according to the invention is shown.

This wireless device (1) preferably has a box-shaped housing. At the outside of this housing, one or more sensors (10) are provided which are adapted to measure parameters of the perishable products to be monitored. In other words, one wireless device (1) can be provided with one sensor (10) or one wireless device (1) can be provided with two or more sensors (10). When a plurality of sensors (10) is provided, the parameters of different boxes, pallets or containers with perishable products can be measured with the same wireless device (1). Preferably, the sensor(s) (10) are executed in the form of temperature probe(s) for measuring the temperature of the perishable products during transport. It is therewith possible to provide one wireless device (1) with one temperature probe (10), which enables measurement of the temperature of one box, one pallet, one container or one trailer (101b) with perishable products. It is therewith also possible to provide one wireless device (1) with two or more temperature probes (10), which enables measurement of the temperature of different boxes, pallets or containers with perishable products within the same trailer (101 b).

In order to log the parameter values, more specifically the temperature, of the monitored perishable products measured during transport by the one or more sensors (10), a measured parameter logger (11) is provided. This measured parameter logger preferably is implemented as a memory (11). The parameter values are received by a microprocessor (12) which is adapted to write these values in the memory (11). The sensor(s) (10) as described above are connected to this microprocessor (12) by means of a hard-wired connection. This memory (11) can be a separate device affixed to a printed circuit board (not shown on the figures) which is installed within the housing of the wireless device (1). This microprocessor (12) can also be a separate device affixed to the printed circuit board. Alternatively, the memory (11) can also be integrated in the same device which comprises the microprocessor (12).

Furthermore, a microbial spoilage model storage is provided which is configured to store a plurality of microbial spoilage models. This microbial spoilage model storage preferably is implemented as a software program (also called computer program) which is adapted to be run on the wireless device (1) and which implements the plurality of microbial spoilage models. This software program preferably is updatable, this update preferably being initiated by the backend system (102) .

Different empirical microbial spoilage models exist to calculate the remaining shelf life value or rate of spoilage (RS) on the basis of temperature values.

Below, the formulas of the square root model of Olley and Ratkowsky, the exponential model of Dalgaard and Huss, and the Arrhenius model for determining the remaining shelf life value at a measured temperature T and the remaining shelf life value with a sequence of different measured temperatures are described.

The square root model (of Olley and Ratkowsky)

Formula:

$$RS = k_1{}^2 \cdot (T - T_{min})^2 \text{ or: } \sqrt{RS} = k_1 \cdot (T - T_{min})$$

wherein $k_1$ = Ratkowsky parameter equal to the slope of the regression line
T = measured temperature in °C
$T_{min}$ = the temperature wherein the microbial growth is minimal in °C
The shelf life value at a certain measured temperature T is then calculated with the formula:
Shelf life at reference temperature

$$\frac{(T - T_{min})^2}{(T_{ref} - T_{min})^2}$$

wherein T = measured temperature in °C
$T_{min}$ = the temperature wherein the microbial growth is minimal in °C $T_{ref}$ = the reference temperature wherein the shelf life is known in °C
The following formula is used for the calculation of the remaining shelf life value with a sequence of different measured temperatures:

$$\text{Remaining shelf life bij } T_{ref} = \text{ Original shelf life at } T_{ref} - \Sigma\, t_i\, \frac{(T_i - T_{min})^2}{(T_{ref} - T_{min})^2}$$

The exponential model (of Dalgaard and Huss)

Formula:

$$\text{Ln}(RS) = k_2 + a \cdot T$$

wherein $k_2$ = constant
a = slope parameter
T = measured temperature
The remaining shelf life value at a certain measured temperature T is then calculated with the formula:
shelf life at a reference temperature

$$\text{Exp}[a \cdot (T - T_{ref})]$$

The following formula is used for the calculation of the remaining shelf life value with a sequence of different measured temperatures:

$$\text{Remaining shelf life at ref temp} = \text{Original shelf life at ref temp} - \Sigma_i\, t_i\, \exp(a(T_i - T_{ref}))$$

The Arrhenius model

Formula:

$$RS = k_3 \cdot \text{Exp}(-E_A/R.T) \text{ or Ln}(RS) = \text{Ln}(k_3) - E_A/R.T$$

wherein $k_3$ = pre-exponential (frequency or steric) factor (almost independent of the temperature, therefore constant for a given reaction)

$E_A$ = activation energy

R = gas or Boltzmann constant of 8,31 (J/mol.K)

T = measured temperature in Kelvin

The remaining shelf life value at a certain measured temperature T (in Kelvin) is then calculated with the formula:

$$\frac{\text{Shelf life bij ref. temp}}{\text{Exp}\left[(-E_A/R).\left(\dfrac{1}{T+273,15} - \dfrac{1}{T_{ref}+273,15}\right)\right]}$$

The following formula is used for the calculation of the remaining shelf life value with a sequence of different measured temperatures (in Kelvin):

$$\text{Remaining shelf life } T_{ref} = \text{Original shelf life at } T_{ref} - \Sigma\, t_i\, \text{Exp}\left\{(-E_A/R)[1/(T_i + 273))-(1/(T_{ref}+273)]\right\}$$

Other known empirical microbial spoilage models, which will not be explained in more detail, are amongst others the linear model of Spencer and Baines, the model of Schoolfield et al. and the Hinshelwood model.

Also a microbial spoilage model parameter storage (11) is provided configured to store the typical parameters used in the respective microbial spoilage models, for instance

- $T_{min}$ for the square root model;
- a for the exponential model; and
- $E_A$ = activation energy.

Also the constants as used in the different microbial spoilage models $k_1$, $k_2$, $k_3$ and R are stored in this microbial spoilage model parameter storage (11). This microbial spoilage model parameter storage preferably is implemented as a memory (11). For the microbial spoilage model parameter storage, the same memory (11) can be used as for the measured parameter logger. Alternatively, a different memory can be used. This different memory can then be a separate device affixed to the printed circuit board or can be integrated in the same device which comprises the microprocessor (12).

In order to receive information indicative of the type of perishable product, the wireless device (1) is provided with an interface. This interface can consist of a manual interface provided on the wireless device (1) itself. For instance, the housing of the wireless device (1) can be provided with a number of push buttons (not shown on the figures), each push button corresponding with a type of perishable product. This information can however also be received from a remote backend system (102) by means of a back-and-forth wireless communication interface (13), which both will be described in more detail below.

The remaining shelf life value for a certain type of perishable product is calculated by means of a remaining shelf life calculator (12) by means of the following steps:

- selecting the appropriate microbial spoilage model from said plurality of microbial spoilage models stored in said microbial spoilage model storage (11), more specifically as implemented in the software program as described above, in function of said information indicative of the type of perishable product to be monitored during transport as received by said communication interface,
- configuring the selected microbial spoilage model by means of the associated microbial spoilage model parameters as stored in said microbial spoilage model parameter storage (11); and
- calculating said remaining shelf life value(s) by inputting said parameter value(s) as logged by said measured parameter logger (11) to said selected microbial spoilage model configured by said associated microbial spoilage model parameters.

This remaining shelf life calculator (12) preferably is implemented as a software program which is executed by the microprocessor (12).

In table 1, an exemplary overview is given of the type of microbial spoilage model (chosen between square root, exponential and Arrhenius model) to be used to calculate the remaining shelf life value for a number of perishable products, the value of the typical parameters of the applicable microbial spoilage model and the restrictions for using this microbial spoilage model.

| Product | | Microbial spoilage model | | | Parameters | Restrictions |
|---|---|---|---|---|---|---|
| | | *Square root* | *Exponential* | *Arrhenius* | | |
| FISH | Fresh fish out of temperate waters * | X | | | $T_{min}$ = -10°C | Storage temperature between -3°C and 15°C |
| | Fish out of tropic waters ** | | X | | a = 0,12 | Storage temperature between 0°C and 30°C  Aerobic |
| | Smoked salmon | | X | | a = 0,089 | Storage temperature between 0°C and 25°C  Vacuum |
| | Boiled and salted shrimps | | X | | a = 0,15 | Storage temperature between 8°C and 25°C  MAP |
| CHICKEN | Chickens bolt | | | X | $E_a$ = 73,9 kJ/mol | Storage temperature < 16°C |
| | Chicken fillet | | | X | $E_a$ = 70,9 kJ/mol | |
| PHARMA-CEUTICAL PRODUCTS | | | | X | $E_a$ = 83,1 kJ/mol | |
| BEEF | Raw minced meat | | | X | $E_a$ = 64,2 kJ/mol | Tested at 2°C, 9°C and 19°C |
| CONCENTRATED APPLE JUICE | Golden delicious | | | X | $E_a$ = 88 kJ/mol | |

Table 1

The remaining shelf life value(s) can be calculated in two different ways:

1/ The remaining shelf life value is calculated by the remaining shelf life calculator (12) on the basis of one measured parameter value, more specifically one measured temperature using the appropriate formula of the microbial spoilage model to be used for the type of monitored perishable product (see the formula above for 'the remaining shelf life value at a certain measured temperature T'). This calculated remaining shelf life value is then stored in a remaining shelf life value storage (11). This storage can occur at regular intervals or each time a parameter value is measured and logged.

2/ The remaining shelf life value of the monitored perishable products is calculated on the basis of a sequence of a plurality of measured parameter values, more specifically a sequence of a plurality of temperature values, using the appropriate formula to be used for the type of monitored perishable product (see the formula above for ' the calculation of the remaining shelf life value with a sequence of different measured temperatures').

For instance, during a first time span, the temperature of the respective perishable products is measured and the temperature values are logged in the measured parameter logger (11). After this first time span, a first value of the remaining shelf life value is calculated by means of the remaining shelf life calculator (12) using the appropriate formula for the calculation of the remaining shelf life value with a sequence of different measured temperatures. This first calculated value of the remaining shelf life is then stored in the remaining shelf life value storage (11). During a second time span, again the temperature of the respective perishable products is measured and the temperature values are logged in the measured parameter logger (11). Again, after this second time span, a second value of the remaining shelf life value is calculated by means of the remaining shelf life calculator (12) using the appropriate formula. This second calculated value of the remaining shelf life is then also stored in the remaining shelf life value storage (11). This is repeated during the whole transport, which enables a user to track when certain events having an impact on the remaining shelf life of the perishable products took place.

The remaining shelf life value storage preferably is implemented as a memory (11). For the remaining shelf life value storage, the same memory (11) can be used as for the microbial spoilage model parameter storage and / or the measured parameter logger. Alternatively, a different memory can be used. This different memory can then be a separate device affixed to the printed circuit board or can be integrated in the same device which comprises the microprocessor (12).

The wireless device (1) according to the invention can also be provided with visual and / or auditive warning means (14) (see figure 1) configured to warn the user or transporter that the value of certain parameters measured by the sensor(s) (10) and / or the remaining shelf life value(s) of the monitored perishable products exceed a predefined threshold value. The visual warning means for example consist of one or more LEDs adapted to light up when said parameter value(s) and / or said remaining shelf life values exceed a predefined threshold value. The auditive warning means for instance consist of a buzzer adapted to produce a sound when said parameter value(s) and / or said remaining shelf life value(s) exceed a predefined threshold value.

On the outside of the housing of the wireless device (1), also a display (15) (see figure 1) can be affixed which shows the remaining shelf life of the monitored perishable products.

An embodiment of a wireless platform (100) according to the invention, as illustrated in figure 2, comprises a truck (101) consisting of a tractor (101 a) and a trailer (101 b). Within the trailer (101 b), one or more wireless devices (1) according to the invention are installed. It is therewith possible to provide one or more wireless device(s) (1) per box, pallet or container with perishable products. This is especially useful when different types of perishable goods are transported within the same trailer (101b).

The wireless platform (100) furthermore comprises a remote backend system (102) (see figures 1 and 2). This remote backend system (102) preferably is implemented as a general purpose pc. During and / or after transport, the calculated value(s) of the remaining shelf life can be reported to this remote backend system (102).

Other information which can be exchanged between the wireless device(s) (1) and the remote backend system (102) using the back-and-forth wireless communication interface (13) is for example the start and stop of the transport, and where and when it is allowed to dump data from the wireless device(s) (1) to the remote backend system (102) by means of the wireless interface.

As can be seen in figure 2, the wireless communication interface (13) between the wireless device(s) (1) and the remote backend system (102) can be established in the two following ways (as illustrated in figure 2):

1) Between the wireless device(s) (1) and the remote backend system (102), a logger gateway (103) is provided which is adapted to communicate with the wireless device(s) (1) by means of a wireless communication (131), preferably by means of the wireless radio-frequency communication (described in more detail below). This logger gateway (103) is adapted to transmit data and information received from the wireless device(s) (1) to the remote backend system (102) and vice versa only at the moment said wireless device(s) (1) comes in the vicinity of said logger gateway (103), for instance when a truck (101) enters a warehouse, or in other words on delivery of the products after transport. At that moment, the remaining shelf life value(s) which has (have) been calculated by the remaining shelf life calculator (12) of the wireless device(s) (1) during transport are dumped into the remote backend system (102) via the logger gateway (103). The communication (133) between the logger gateway (103) and the remote backend system (102) preferably is an internet connection.

2) Between the wireless device(s) (1) and the remote backend system (102), a gateway (104) is provided which is adapted to send data and information from the wireless device(s) (1) to the remote backend system (102) and vice versa at regular intervals, and if necessary quasi constantly, during transport through a board computer or a wide area wireless network communication means (105). The communication (134) between the gateway (104) and the board computer (105) mostly is established via a serial cable. The board computer or wide area wireless network communication means (105) can for instance be installed inside the tractor (101 a) of the truck (101). The communication (135) between the board computer or the wide area wireless network communication means (105) and the remote backend system (102) preferably is established by means of a wide area wireless network connectivity such as GSM, GPRS, UMTS, Satellite, etc using an internet connection. The communication (132) between the wireless device(s) (1) and the gateway (104) is a wireless communication, preferably a wireless radio-frequency communication (as described in more detail below).

The wireless radio-frequency (RF) communication interface (131, 132) as mentioned above preferably uses the IEEE 802.15.4 standard. It is therewith possible to apply the Zigbee technology which builds upon the physical layer and medium access control defined in the IEEE standard 802.15.4. Both gateways (103, 104) and the one or more wireless devices (1) are provided with a radio module in order to be able communicate with each other by means of the IEEE standard 802.15.4.

The wireless device (1) can furthermore locally be provided with an interface in order to be able to configure the wireless device (1) directly by means of a software program to adapt all kinds of setting of the wireless device (1), for instance to adapt the settings of the RF communication in order to take care that the radio modules of the respective gateway (103, 104) and the wireless device(s) (1) communicate on the same frequency.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one (s) described or illustrated above.

## Claims

1.  A wireless device (1) for real-time monitoring of perishable products during transport, comprising

    - a measured parameter logger (11) configured to log one or more parameter values of the monitored perishable products measured during transport by means of one or more sensor(s) (10);
    - a microbial spoilage model storage configured to store a plurality of microbial spoilage models;
    - a microbial spoilage model parameter storage (11) configured to store at least one microbial spoilage model parameter associated with said microbial spoilage models;
    - a communication interface adapted to receive information indicative for the type of perishable product to be monitored during transport;
    - a remaining shelf life calculator (12) located within the wireless device (1) itself and configured to calculate one or more remaining shelf life values of said monitored perishable products, said remaining shelf life value (s) being calculated by means of the following steps:

       • selecting the appropriate microbial spoilage model from said plurality of microbial spoilage models stored in said microbial spoilage model storage in function of said information indicative of the type of perishable product to be monitored during transport as received by said communication interface,
• configuring the selected microbial spoilage model by means of the associated microbial spoilage model parameters as stored in said microbial spoilage model parameter storage (11); and
• calculating said remaining shelf life value(s) by inputting said parameter value(s) as logged by said measured parameter logger (11) to said selected microbial spoilage model configured by said associated microbial spoilage model parameters; and

- a remaining shelf life value storage (11) configured to store said remaining shelf life value(s) calculated by said remaining shelf life calculator (12); and
- a wireless communication interface (13) configured to transmit said remaining shelf life value(s) stored in said remaining shelf life value storage (11) to a gateway (103, 104) which is adapted to transmit these remaining shelf life value(s) to a remote backend system (102).

2. A wireless device (1) according to claim 1,
**CHARACTERISED IN THAT** said gateway (103) is adapted to transmit said remaining shelf life value(s) calculated by said remaining shelf life calculator (12) to the remote backend system (102) only on delivery of the perishable products after transport.

3. A wireless device (1) according to claim 1,
**CHARACTERISED IN THAT** said gateway (104) is adapted to transmit said remaining shelf life value(s) calculated by said remaining shelf life calculator (12) to the backend system (102) at regular intervals during transport through a board computer or a wide area wireless network communication means (105).

4. A wireless device (1) according to any one of claims 1 to 3, **CHARACTERISED IN THAT** said plurality of microbial spoilage models are implemented in a software program which is adapted to be run on the wireless device (1).

5. A wireless device (1) according to any one of claims 1 to 4, **CHARACTERISED IN THAT** the communication interface for receiving information indicative for the type of perishable product monitored during transport consists of said wireless communication interface (13) with the remote backend system (102).

6. A wireless device (1) according to any one of claims 1 to 4, **CHARACTERISED IN THAT** the communication interface for receiving information indicative for the type of perishable product monitored during transport consists of a manual interface provided on the wireless device (1) itself.

7. A wireless device (1) according to any one of claims 1 to 6, **CHARACTERISED IN THAT** the wireless device (1) is provided with visual and / or auditive warning means (14) configured to provide an alarm when said parameter value(s) measured by said sensor(s) (10) and / or said remaining shelf life value(s) exceed a predefined threshold value.

8. A wireless device (1) according to claim 7,
**CHARACTERISED IN THAT** said visual warning means consist of one or more LEDs adapted to light up when said parameter value(s) and / or said remaining shelf life value(s) exceed a predefined threshold value.

9. A wireless device (1) according to claim 7 or 8,
**CHARACTERISED IN THAT** said auditive warning means consist of a buzzer adapted to produce a sound when said parameter value(s) and / or said remaining shelf life value(s) exceed a predefined threshold value.

10. A wireless device (1) according to any one of claims 1 to 9, **CHARACTERISED IN THAT** the wireless device (1) is provided with a display displaying said remaining shelf life value(s) of the monitored perishable products.

11. A wireless device (1) according to any one of claims 1 to 10, **CHARACTERISED IN THAT** said remaining shelf life calculator (12) is adapted to calculate said remaining shelf life value(s) of the monitored perishable products at regular intervals during transport.

12. A wireless device (1) according to any one of claims 1 to 11, **CHARACTERISED IN THAT** said measured parameter logger (11) is adapted to log a sequence of a plurality of parameter values measured by said sensor(s) (10), and said remaining shelf life calculator (12) is adapted to calculate the remaining shelf life value of the monitored perishable products using said sequence of plurality of parameter values.

**13.** A wireless device (1) according to any one of claims 1 to 12, **CHARACTERISED IN THAT** said one or more sensor (s) (10) are adapted to measure the temperature of the monitored perishable products.

**14.** A wireless platform for real-time monitoring of perishable products during transport, comprising

    - a transport unit (101 b) equipped with one or more wireless devices (1), comprising

        • a measured parameter logger (11) configured to log one or more parameter values of the monitored perishable products measured during transport by means of one or more sensor(s) (10);
        • a microbial spoilage model storage configure do store a plurality of microbial spoilage models,
        • a microbial spoilage model parameter storage (11) configured to store at least one microbial spoilage model parameter associated with said microbial spoilage models;
        • a communication interface adapted to receive information indicative for the type of perishable product to be monitored during transport;
        • a remaining shelf life calculator (12) located within the wireless device (1) itself and configured to calculate one or more remaining shelf life values of said monitored perishable products, said remaining shelf life value(s) being calculated by means of the following steps:

            • selecting the appropriate microbial spoilage model from said plurality of microbial spoilage models stored in said microbial spoilage model storage in function of said information indicative of the type of perishable product to be monitored during transport as received by said communication interface;
            • configuring the selected microbial spoilage model by means of the associated microbial spoilage model parameters as stored in said microbial spoilage model parameter storage (11); and
            ■ calculating said remaining shelf life value(s) by inputting said parameter value(s) as logged by said measured parameter logger (11) to said selected microbial spoilage model parameters; and

        • a remaining shelf life value storage (11) configured to store said remaining shelf life calculated by said remaining shelf life calculator (12);
        • a wireless communication interface (13) configured to transmit said remaining shelf life value(s) stored in said remaining shelf life value storage (11) to a gateway (103, 104) which is adapted to transmit these remaining shelf life value(s) to a remote backend system (102); and

    - a remote backend system (102) adapted to receive said remaining shelf life value(s) transmitted by said wireless communication interface (13).

**15.** A wireless platform according to claim 14,
**CHARACTERISED IN THAT** said transport unit (101 b) comprises one or more wireless devices (1) according any one of claims 1 to 13.

**FIG 1**

**FIG 2**

Europäisches
Patentamt

European
Patent Office

Office européen
des brevets

# EUROPEAN SEARCH REPORT

Application Number

EP 12 16 0205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/222235 A1 (VAILLANT RENAUD [FR]) 3 September 2009 (2009-09-03) * the whole document * | 1-15 | INV. G06Q10/08 G06K19/07 |
| X,D | WO 2005/106813 A2 (INFRATAB INC [US]) 10 November 2005 (2005-11-10) * abstract * * figures 1,5-7, 9-12 * * page 1 - page 4, paragraph 2 * * page 5, paragraph 3 - page 9, paragraph 3 * * page 11, paragraph 2 - page 18, paragraph 3 * * page 21, paragraph 2 - page 21, paragraph 3 * * claims * | 1-15 | |
| X | EP 1 457 764 A1 (THERMOCHRON S R L [IT]) 15 September 2004 (2004-09-15) * the whole document * | 1-15 | |
| X | US 2004/019453 A1 (BLAKLEY DANIEL ROBERT [US]) 29 January 2004 (2004-01-29) * abstract * * figures 1,5 * * paragraph [0006] - paragraph [0029] * * paragraph [0037] - paragraph [0048] * | 1-15 | TECHNICAL FIELDS SEARCHED (IPC) G06Q G06K |
| X,D | GB 2 361 064 A (GLANCE TECH LTD [GB]) 10 October 2001 (2001-10-10) * the whole document * | 1-15 | |

The present search report has been drawn up for all claims

| Place of search | Date of completion of the search | Examiner |
|---|---|---|
| The Hague | 19 July 2012 | Berlea, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 16 0205

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2012

| Patent document cited in search report | | Publication date | Patent family member(s) | | Publication date |
|---|---|---|---|---|---|
| US 2009222235 | A1 | 03-09-2009 | AU | 2006329759 A1 | 05-07-2007 |
| | | | BR | PI0620936 A2 | 29-11-2011 |
| | | | CN | 101336367 A | 31-12-2008 |
| | | | EP | 1971840 A2 | 24-09-2008 |
| | | | JP | 2009522545 A | 11-06-2009 |
| | | | US | 2009222235 A1 | 03-09-2009 |
| | | | WO | 2007074247 A2 | 05-07-2007 |
| WO 2005106813 | A2 | 10-11-2005 | AU | 2005239408 A1 | 10-11-2005 |
| | | | AU | 2009210394 A1 | 10-09-2009 |
| | | | BR | PI0510106 A | 25-09-2007 |
| | | | CA | 2563524 A1 | 10-11-2005 |
| | | | EP | 1741074 A2 | 10-01-2007 |
| | | | NZ | 551687 A | 26-02-2010 |
| | | | US | 2005248455 A1 | 10-11-2005 |
| | | | WO | 2005106813 A2 | 10-11-2005 |
| EP 1457764 | A1 | 15-09-2004 | EP | 1457764 A1 | 15-09-2004 |
| | | | JP | 2004279410 A | 07-10-2004 |
| | | | US | 2004181363 A1 | 16-09-2004 |
| US 2004019453 | A1 | 29-01-2004 | CA | 2424633 A1 | 29-10-2003 |
| | | | EP | 1359395 A2 | 05-11-2003 |
| | | | JP | 2004000583 A | 08-01-2004 |
| | | | US | 2003204359 A1 | 30-10-2003 |
| | | | US | 2004019453 A1 | 29-01-2004 |
| GB 2361064 | A | 10-10-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6798376 B
- GB 2361064 A
- WO 2005106813 A
- WO 2008087396 A